(19) Europäisches Patentamt
European Patent Office
Office européen des brevets

(11) **EP 2 778 205 A1**

(12) **EUROPEAN PATENT APPLICATION**
published in accordance with Art. 153(4) EPC

(43) Date of publication:
**17.09.2014 Bulletin 2014/38**

(21) Application number: **12846986.3**

(22) Date of filing: **09.11.2012**

(51) Int Cl.:
**C09J 7/04** (2006.01)   **C09J 201/00** (2006.01)

(86) International application number:
**PCT/JP2012/079170**

(87) International publication number:
**WO 2013/069784 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2011   JP 2011246960**

(71) Applicants:
• **Kamoi Kakoshi KK**
**Okayama**
**710-8611 (JP)**
• **Asahi Kasei Fibers Corporation**
**Osaka 530-8205 (JP)**

(72) Inventors:
• **MASUNARI, Yasuhiro**
**Kurashiki-shi**
**Okayama 710-8611 (JP)**

• **KUROSE, Tetsuo**
**Kurashiki-shi**
**Okayama 710-8611 (JP)**
• **OMIZU, Katsuji**
**Kurashiki-shi**
**Okayama 710-8611 (JP)**
• **IWASAKI, Hirofumi**
**Tokyo 101-8101 (JP)**

(74) Representative: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(54) **ADHESIVE TAPE AND MASKER**

(57) The purpose of the present invention to provide an adhesive tape that has a feel and texture that is very close to paper tape; that follows curbed surfaces, rough surfaces, and irregular surfaces well; has excellent water resistance; is not susceptible to tearing when removed after the completion of work; and is easily cut by hand. The adhesive tape of the present invention is characterized as follows: a tape base cloth comprises spunbonded thermoplastic long fiber non-woven cloth with a basis weight of 15-60 g/m$^2$ and the tape is embossed in the width direction; a tape substrate sheet is prepared by permeating the tape base cloth with a synthetic resin having a glass transition temperature of no more than 20°C so that the quantity of synthetic resin after drying is 5-150% by weight of the total basis weight of non-woven cloth; and an adhesive agent is applied to one side of the tape substrate sheet and a release agent to the other side thereof.

Fig.1

(a)

(b)

EP 2 778 205 A1

**Description**

TECHNICAL FIELD

The present invention relates to a tape base fabric that has superior followability of curved surfaces, rough surfaces and irregular surfaces, superior adhesiveness and water resistance, demonstrates little tearing when peeling after having been applied, and is easily torn by hand, an adhesive tape that uses the same (and particularly a masking tape for use in painting or sealing in construction applications or a curing tape preferably used for immobilizing curing sheets), and a masker.

BACKGROUND ART

Known examples of conventional adhesive tape substrates include paper substrates such as Japanese paper or crepe paper composed mainly of wood pulp. Adhesive tape using these substrates can be easily torn by hand, and due to this favorable property referred to as tearability, this type of adhesive tape is widely used for painting and sealing automobiles or building structures in which the emphasis is placed on workability. In addition, since these paper substrates can be imparted with a desired flexibility by changing the thickness, fiber composition, penetrant or back coating agent and the like, a wide variety of products have recently become available that offer favorable adhesiveness as well as followability of curved surfaces, rough surfaces and irregular surfaces.

However, adhesive tape using a paper substrate that emphasizes surface followability in this manner has the shortcomings of decreased wet strength or increased susceptibility to tearing when peeled after having been applied, while also having numerous problems in terms of water resistance and solvent resistance. Consequently, although attempts have been made to make improvements with respect to penetrants, back surface treatment agents and the like, those efforts have been inadequate.

In addition, examples of adhesive tape include painting masking tape and curing tape, and cloth tape is widely used that is obtained by impregnating a resin into a woven fabric consisting of spun yarn mainly composed of rayon staple fiber or cotton, or by adhesive processing on a substrate laminated with a polyolefin sheet. In addition, an adhesive tape has also been proposed that is obtained by forming an adhesive layer on at least one side of a flat yarn cloth composed of a thermoplastic resin, and interposing a polyethylene-based adhered layer between the two so as to maintain the integrity of both (see Patent Document 1 indicated below).

However, in the case of the aforementioned cloth tape, since the tape substrate is produced using rayon staple fiber or cotton, there are the problems of extremely high hygroscopicity and inferior water resistance. Moreover, in the case of adhesive tape that uses the aforementioned cloth tape or the adhesive tape using flat yarn cloth disclosed in Patent Document 1, since the yarn or flat yarn cloth is a laminated layer in which the yarn or flat yarn cloth is completely restrained in a laminated layer in the form of a film, flexibility is impaired, thereby resulting in problems with adhesiveness and followability of curved surfaces, rough surfaces and irregular surfaces, and limitation of the applications thereof.

In addition, an adhesive tape has been proposed that is obtained by restraining a laminate of a longitudinally drawn fiber layer and a transversely drawn fiber layer composed of thermoplastic resin with a thermoplastic resin (see Patent Document 2 indicated below). However, in the case of this adhesive tape, since the fibers are completely restrained with the thermoplastic resin and in result, the flexibility of the tape substrate is impaired in the same manner as the previously described cloth tape and flat yarn cloth tape, there are problems with adhesiveness and followability of curved surfaces, rough surfaces and irregular surfaces, and although this tape can be used on smooth adherends, it encounters problems when used as masking tape used for painting building structures, as sealing masking tape, or as curing tape, which require adhesiveness and followability of curved surfaces, rough surfaces and irregular surfaces. Moreover, although tearability in the transverse direction becomes favorable if fibers are completely restrained in this manner, tearing also becomes easy in the longitudinal direction, which is a critical problem for use as a tape. In particular, in the case of tape having a width of 50 mm typically used as curing tape, the problem of longitudinal tearing when tearing by hand or when peeling from an adherend after use is remarkably prominent.

Moreover, a medical adhesive tape substrate is also known that uses a long fiber non-woven fabric produced by spunbonding (see Patent Document 3 indicated below). Patent Document 3 discloses a medical adhesive tape substrate consisting of a laminated non-woven fabric composed of one or more layers each of a surface layer, intermediate layer and back layer integrated into a single unit by thermocompression bonding, wherein the non-woven fabric of the surface layer is composed of thermoplastic synthetic long fibers having a fiber diameter of 30 $\mu$m or less, the non-woven fabric of the intermediate layer is composed of melt blown fibers having a fiber diameter of 10 $\mu$m or less, the non-woven fabric of the back layer is composed of thermoplastic synthetic long fibers having a diameter of 10 $\mu$m to 30 $\mu$m, and has a basis weight of 3 g/m$^2$ or more. As a result of employing this constitution, even if there is only a small amount of microfibers in the form of a melt blown fiber layer present in the intermediate layer, there is less susceptibility to the occurrence of fiber loosening caused by positional shifts with respect to highly viscous adhesive materials, thereby enabling this layer to effectively function as a shielding layer, which in addition to achieving offsetting performance parameters in the form of both adhesion by penetration of the adhesive material into the substrate and prevention of permeation to the back side, realizes high levels of air permeability and flexibility.

However, although considerations have been given to prevention of permeation of a highly viscous adhesive to the back side since this substrate is formed from thermoplastic fibers only, considerations have not been given to lowly viscous paint and the like. In addition, since considerations have also not been given to manual tearability, problems are encountered when this substrate is used in applications such as masking tape used for painting building structures.

PRIOR ART

PATENT DOCUMENTS

Patent Document 1: Japanese Unexamined Patent Publication No. H10-237395
Patent Document 2: Japanese Unexamined Patent Publication No. 2003-193005
Patent Document 3: Japanese Unexamined Patent Publication No. 2007-075502

SUMMARY OF THE INVENTION

PROBLEMS TO BE SOLVED BY THE INVENTION

An object of the present invention is to provide an adhesive tape such as a masking tape or curing tape that has superior followability of curved surfaces, rough surfaces and irregular surfaces, superior water resistance, demonstrates little tearing when peeling after having been applied, and is easily torn by hand, and a masker that uses that adhesive tape.

MEANS FOR SOLVING THE PROBLEMS

As a result of conducting extensive studies, the inventors of the present invention found that a tape base fabric composed of a non-woven fabric embossed in the form of a solid line or broken line in the width direction of the tape is effective for achieving the aforementioned object, and succeeded in obtaining a high-performance adhesive tape and masker by using this tape base fabric, thereby leading to completion of the present invention. Namely, the present invention provides the inventions indicated below.

(1) An adhesive tape, comprising: coating an adhesive onto one side of a tape substrate sheet, obtained by impregnating a synthetic resin having a glass transition temperature of 20°C or lower into a tape base fabric composed of a spunbonded thermoplastic long fiber non-woven fabric having a basis weight of 15 $g/m^2$ to 60 $g/m^2$ embossed in the width direction of the tape, at 5% by weight to 150% by weight as the amount of synthetic resin after drying based on the basis weight of the non-woven fabric, and coating a release agent onto the opposite side.
(2) The adhesive tape described in (1) above, wherein the embossing is composed of a solid line or broken line.
(3) The adhesive tape described in (1) or (2) above, wherein the thickness of the long fiber non-woven fabric is 30 $\mu$m to 500 $\mu$m.
(4) The adhesive tape described in any one of (1) to (3) above, wherein the long fiber non-woven fabric is calendered, and the thickness thereof is 30 $\mu$m to 150 $\mu$m.
(5) The adhesive tape described in any one of (1) to (4) above, wherein the thermoplastic long fibers are one or more types selected from polyester-based fibers selected from polyethylene terephthalate, polybutylene terephthalate, polytrimethylene terephthalate and polyethylene isophthalate, polyolefin-based fibers selected from high-density polyethylene, low-density polyethylene, polypropylene and ethylene-propylene copolymer, and polyamide-based fibers selected from nylon 6, nylon 66, nylon 610 and nylon 612.
(6) The adhesive tape described in any one of (1) to (5) above, wherein the synthetic resin is one or more types selected from natural rubber, synthetic rubber, (meth)acrylic acid ester copolymer, ethylene-vinyl acetate copolymer, polyvinyl acetate, polyvinyl chloride and polyurethane.
(7) The adhesive tape described in any one of (1) to (6) above, wherein the synthetic resin is foamed.
(8) The adhesive tape described in any one of (1) to (7) above, wherein a top coat layer composed of a synthetic resin having a glass transition temperature of 0°C to 40°C is provided on one side or both sides of the tape substrate sheet over a range of 2 $g/m^2$ to 15 $g/m^2$ of the amount of synthetic resin after drying.
(9) The adhesive tape described in any one of (1) to (8) above, wherein the adhesive is at least one type selected from rubber-based adhesive, acrylic-based adhesive, silicone-based adhesive and polyurethane-based adhesive.

(10) The adhesive tape described in any one of (1) to (9) above, wherein the impression depth ratio of embossed indentations is 65% to 90% of the thickness of non-embossed portions, and the interval between indentations is 1 mm to 10 mm.

(11) The adhesive tape described in any one of (1) to (10) above, wherein tensile strength in the lengthwise direction is 5 N/10 mm or more, and stress during elongation by 5% in the lengthwise direction is 30 N/10 mm or less.

(12) The adhesive tape described in any one of (1) to (11) above, wherein flexural rigidity is 0.1 mN·cm$^2$/cm to 5.0 mN·cm$^2$/cm in terms of the average value of flexural rigidity when bending to the front and back sides in the lengthwise direction as measured with the Kawabata Evaluation System (KES) and 0.1 mn·cm$^2$/cm to 3.0 mN·cm$^2$/cm in terms of the average value of flexural rigidity when bending to the front and back sides in the widthwise direction.

(13) The adhesive tape described in any one of (1) to (12) above, wherein initial tear strength according to the trapezoid method is 12 N/25 mm or less.

(14) A masking tape, comprising: winding the adhesive tape described in any one of (1) to (13) above having a thickness of 30 μm to 150 μm into the form of a roll.

(15) A masker, comprising: adhering the side edge on one side in the lengthwise direction of the adhesive surface of the adhesive tape according to any one of (1) to (13) above having a thickness of 100 μm to 500 μm along the side edge of a curing sheet material, and winding the entirety thereof into the form of a roll.

(16) A method for producing an adhesive tape, comprising: thermocompression bonding a spunbonded thermoplastic long fiber non-woven fabric having a basis weight of 15 g/m$^2$ to 60 g/m$^2$ between a pair of rollers composed of a smoothing roller and an embossing roller having protrusions in the form of a solid line or broken line at an angle of 0.2 degrees or more with respect to the rotational axis of the rollers, followed by impregnating with a synthetic resin having a glass transition temperature of 20°C or lower so that the impregnated amount of synthetic resin after drying is within the range of 5% by weight to 150% by weight based on the basis weight of the non-woven fabric, thereby obtaining a tape substrate sheet, and then coating an adhesive onto one side of the tape substrate sheet obtained, and coating a release agent onto the opposite side.

EFFECTS OF THE INVENTION

The adhesive tape of the present invention has superior followability of a curved surface, rough surface and irregular surface, and superior water resistance, demonstrates little tearing of the tape when peeled after having been applied, and has favorable manual tearability. Thus, it is preferably used for a masking tape, curing tape or masker and the like by taking advantage of these characteristics. In particular, it has superior workability when used as a masking tape for painting rough surfaces by being adhered to a rough surface, or when used as a rough surface curing tape.

BRIEF DESCRIPTION OF THE DRAWINGS

FIG. 1 depicts schematic drawings of a cross-section and finished product of a masker.
FIG. 2 is a drawing for explaining impression depth ratio of embossed indentations.
FIG. 3 is a model diagram of results of measuring tear strength.

MODE FOR CARRYING OUT THE INVENTION

The tape base fabric used in the present invention is composed of a long fiber non-woven fabric produced by spunbonding using a thermoplastic resin, has a partial thermocompression bonded portion that improves mechanical strength when produced by spunbonding and a different partial thermocompression bonded portion obtained by embossing that imparts manual tearability, is subjected to calendering as necessary, has high strength in the lengthwise direction when formed into a tape, and has superior tearability in the widthwise direction and superior manual tearability.

Examples of composite fibers of the long fiber non-woven fabric used in the present invention include polyester-based fibers selected from polyethylene terephthalate, polybutylene terephthalate, polytrimethylene terephthalate, polyethylene isophthalate, copolymer polyester, polylactic acid and fatty acid polyester, polyolefin-based fibers selected from high-density polyethylene, low-density polyethylene, polypropylene and ethylene-propylene copolymer, and polyamide-based fibers selected from nylon 6, nylon 66, nylon 610 and nylon 612. In addition, the composite fibers may also be conjugated fibers composed of two components such as fibers having a core-sheath structure or side-by-side structure, such as conjugated fibers in which the core has a high melting point and the sheath has a low melting point, specific examples of which include fibers composed of a high melting point resin for the core, such as polyethylene terephthalate, polybutylene terephthalate, copolymer polyester, nylon 6 or nylon 66, and composed of a low melting point resin for the sheath, such as low-density polyethylene, high-density polyethylene, polypropylene copolymer polyethylene, copolymer polypropylene, copolymer polyester or fatty acid polyester. Moreover, examples of fibers that can be used as heat-resistant fibers include polybenzoxazole (PBO) fibers, polyphenylene sulfide (PPS) fibers, polyimide (PI) fibers, fluorine fibers and polyether ether ketone (PEEK) fibers.

The following provides an explanation of a typical example of a method for producing a long fiber non-woven fabric.

A long fiber non-woven fabric can be obtained by discharging a molten thermoplastic resin from a spinneret by spunbonding, drawing, cooling and opening the resulting spun yarn followed by collecting on a conveyor net to form a fiber web, and thermocompression bonding between a pair of embossing rollers.

The degree to which the fibers of the long fiber non-woven fabric are arranged can be determined based on the ratio of tensile strength in a direction perpendicular to the machine direction (widthwise direction of the tape) to tensile strength in the machine direction (lengthwise direction of the tape). For example, the ratio of tensile strength in the lengthwise direction to tensile strength in the widthwise direction is preferably 0.8 to 3.5, more preferably 0.85 to 3.0 and particularly preferably 0.9 to 2.5. If fiber arrangement as represented by the aforementioned ratio is less than 0.8, tensile strength in the lengthwise direction decreases, while if fiber arrangement exceeds 3.5, although high tensile strength is obtained in the lengthwise direction, there is increased susceptibility to ripping and manual tearability decreases.

The fiber diameter of fibers composing the long fiber non-woven fabric used in the present invention is preferably 0.1 $\mu$m to 30 $\mu$m, more preferably 0.1 $\mu$m to 25 $\mu$m, even more preferably 1 $\mu$m to 20 $\mu$m, particularly preferably 1.5 $\mu$m to 20 $\mu$m and most preferably 2 $\mu$m to 20 $\mu$m. The fiber composition of the long fiber non-woven fabric consists of fibers having the same fiber diameter, or can be selected from a mixture or laminate of fibers having different fiber diameters such as microfibers and thick fibers. In the case of a laminate, a fiber composition can be selected in which a laminate, consisting of microfibers (M) having a fiber diameter of 0.1 $\mu$m to 7 $\mu$m and synthetic fibers (S) having a fiber diameter of 10 $\mu$m to 30 $\mu$m, has multiple layers of 2 to 8 layers such as SM, SMS, SMMS or SSMMSS. In the case of employing a multilayer composition in particular, the fibers can be joined together securely, the fiber composition is equalized and dispersibility of the fibers improves, and opacity improves.

The basis weight of the long fiber non-woven fabric used in the present invention is preferably 15 g/m$^2$ to 60 g/m$^2$, more preferably 20 g/m$^2$ to 60 g/m$^2$ and particularly preferably 20 g/m$^2$ to 50 g/m$^2$, and the thickness thereof is preferably 30 $\mu$m to 500 $\mu$m, more preferably 40 $\mu$m to 400 $\mu$m and particularly preferably 45 $\mu$m to 350 $\mu$m. In the case the fiber diameter is less than 0.1 $\mu$m, the basis weight is less than 15 g/m$^2$ and the thickness is less than 30 $\mu$m, strength when used as a tape decreases resulting in increased susceptibility to tearing. On the other hand, if the fiber diameter exceeds 30 $\mu$m, the basis weight exceeds 60 g/m$^2$ and the thickness exceeds 500 $\mu$m, although high strength is obtained, flexibility decreases resulting in a decrease in followability of surface irregularities and rough surfaces. In addition, in the case of using in masking tape or curing tape and the like, the long fiber non-woven fabric is preferably subjected to calendering to reduce thickness in consideration of handling ease, reduction of the amount of impregnated resin and manual tearability, and thus, the thickness in that case is preferably 30 $\mu$m to 150 $\mu$m, more preferably 45 $\mu$m to 130 $\mu$m, particularly preferably 30 $\mu$m to 120 $\mu$m, and most preferably 30 $\mu$m to 100 $\mu$m.

Thermocompression bonding of the long fiber non-woven fabric used in the present invention consists of partial thermocompression bonding that imparts mechanical strength which is carried out when producing spunbonded non-woven fabric, and different partial thermocompression bonding in which embossing is carried out in the widthwise direction of the tape. Moreover, calendering may also be carried out. Thus, the long fiber non-woven fabric has high strength in the lengthwise direction, has reduced thickness, easily tears in the widthwise direction and has superior manual tearability.

In the partial thermocompression bonding carried out when producing a long fiber non-woven fabric by spunbonding, the long fiber non-woven fabric is thermocompression bonded between a pair of rollers consisting of an embossing roller and a smoothing roller, the non-woven fabric is partially fusion bonded, and a long fiber non-woven fabric is obtained that has mechanical strength in which each fiber layer is joined. Examples of the embossing pattern of the embossing roller includes dots, diamonds, rectangles and ovals, and an embossed pattern in the form of a zigzag pattern and the like can be evenly arranged on the entire non-woven fabric. The area per single embossing is preferably 10 mm$^2$ or less and more preferably 0.2 mm$^2$ to 6 mm$^2$ and a comparatively small joined portion is preferably formed. The ratio of the partial thermocompression bonded area to total area is preferably 3% to 30% and more preferably 4% to 25%. The conditions for partial thermocompression bonding are such that the temperature is set to a temperature range of 30°C to 130°C lower than the melting point of the fibers used, and the pressure is set to a pressure range of 10 N/cm to 1000 N/cm and preferably 20 N/cm to 700 N/cm.

Embossing of the long fiber non-woven fabric in the widthwise direction of the tape is carried for the purpose of imparting manual tearability when in the form of a tape. Thus, embossing in the form of a solid line or broken line is preferable.

In the case of embossing in the form of a solid line or broken line, as a result of carrying out embossing at an angle of inclination with respect to the rotational axis of the roller, contact between the upper and lower rollers changes from intermittent contact to continuous contact, thereby making it possible to reduce the generation of contact noise and improving engraving wear. The angle of inclination is preferably 0.2 degrees or more, more preferably 0.5 degrees to 5.0 degrees, and particularly preferably 0.7 degrees to 3 degrees. If embossing is carried out on an angle, the impression depth ratio of the indentations, manual tearability, workability with respect to noise, and durability of the engraving pattern can be improved. The embossed shape consists of comparatively narrow, projecting protrusions in the form of a solid line or broken line. The width of the protrusions and the embossing interval of an embossed shape in the form of a solid line are limited in consideration of manual tearability and strength. The width of the protrusions is preferably 0.1 mm to 2.0 mm, more preferably 0.12 mm to 1.5 mm and particularly preferably 0.15 mm to 1.0 mm, while the embossing interval is preferably 1 mm to 10 mm, more preferably 2 mm to 10 mm, even more preferably 2.5 mm to 7 mm, particularly preferably 2 mm to 6 mm and most preferably 2 mm to 5 mm. Although the width of the protrusions and embossing interval in the case of an embossed shape in the form of a broken line are selected from the same ranges as those in the case of a solid line, the ratio of the length of the embossed portion A to the length of the non-embossed portion B (A/B) is preferably 1.0 to 3.0, more preferably 1.1 to 2.5 and particularly preferably 1.2 to 2.0.

Embossing conditions in the present invention are set between the pair of rollers consisting of the embossing roller and the smoothing roller. The surface temperature of the embossing roller is preferably selected from the range of normal temperature (20°C) to a temperature equal to or below the melting point of the non-woven fabric, more preferably from 50°C to a temperature 30°C lower than the melting point of the non-woven fabric, and particularly preferably from 70°C to a temperature 50°C lower than the melting point of the non-woven fabric. The pressure is preferably 10 N/cm to 1000 N/cm, more preferably 20 N/cm to 700 N/cm and particularly preferably 30 N/cm to 500 N/cm. If the temperature is below normal temperature (20°C) and the pressure is less than 20 N/cm, the degree of embossing processing decreases and the target manual tearability cannot be obtained. On the other hand, if the temperature exceeds the melting point of the non-woven fabric or the pressure exceeds 1000 N/cm, processability decreases considerably due to the non-woven fabric fusing to the heated roller.

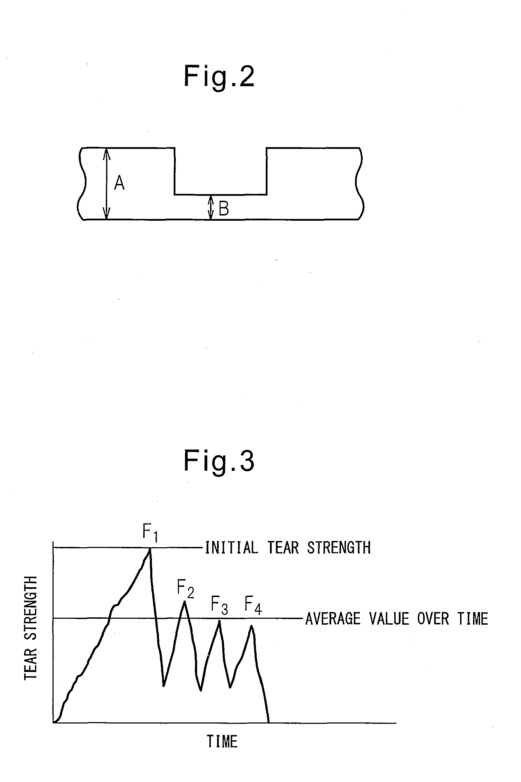

The impression depth ratio (FIG. 2) of indentations formed by the embossing processing of the present invention is an important condition serving as the starting point of manual tearing. Thus, the impression depth ratio is preferably 65% to 90%, more preferably 70% to 90% and particularly preferably 75% to 90% based on the thickness of the non-embossed portion. If the impression depth ratio is less than 65%, resinification of the indentations becomes inadequate and the starting point of manual tearing is insufficient. On the other hand, if the impression depth ratio exceeds 90%, resinification of the indentations becomes excessive resulting in increased susceptibility to the formation of holes.

Calendering processing carried out on the long fiber non-woven fabric in the present invention is carried out for the purpose of reducing thickness to flatten the non-woven fabric and impart a fine structure. Calendering processing may be carried out after partial compression bonding in the aforementioned spunbonding method, or may be carried out after embossing in the widthwise direction of the tape as previously described. The conditions of calendering processing are such that calendering processing is carried out at a temperature of normal temperature to 230°C and pressure of 10 N/cm to 1000 N/cm using a calendering machine between a pair of rollers having a smooth surface, such as a metal roller and a paper roller, a metal roller and a cotton roller or a metal roller and another metal roller. However, calendering processing conditions are selected within a temperature and pressure range that makes it possible to maintain an object of the present invention in the form of followability of irregular shapes. For example, calendering processing is carried out such that the temperature is 30°C lower than the melting point of the composite fibers or the pressure is 1000 N/cm or less. The aforementioned widthwise embossing and calendering processing may be selected from carrying out embossing followed by calendering, or carrying out calendering followed by embossing.

In the present invention, impregnation processing of a synthetic resin carried out on a tape base fabric is carried out for the purpose of improving manual tearability of the tape by reducing gaps in the fibers that compose the tape base fabric (adhering fibers and reducing gaps), preventing penetration of processing agents into the base fabric in the case of coating a release agent or adhesive onto the surface of the resulting tape base fabric (preventing processing agents from permeating to the back side), and improving the strength of the base fabric. The synthetic resin is selected from soft synthetic resins having a glass transition temperature (Tg) of 20°C or lower, and examples thereof include at least one type or two or more types selected from the group consisting of natural rubber, synthetic rubber, (meth)acrylic acid ester copolymer, ethylene-vinyl acetate copolymer, polyvinyl acetate, polyvinyl chloride and polyurethane. The penetrant has a glass transition temperature of preferably 20°C or lower, more preferably 0°C to -70°C and even more preferably -10°C to -60°C. In addition, a synthetic resin may be used by dispersing in an aqueous dispersion, prepared by mixing an aqueous dispersion having a glass transition temperature higher than 20°C and an aqueous dispersion having a glass transition temperature lower than 20°C and adjusting the average value of the glass transition temperature to lower than 20°C, or in an organic solvent or volatile oil and the like. In the synthetic resin used in the present invention, a lower glass transition temperature is preferable since it results in a more flexible resin.

Moreover, examples of methods used to obtain the effect of filling in gaps in the non-woven fabric used in the present invention with a small amount of resin include resin foaming consisting of adding a foaming agent to a synthetic resin followed by mixing and heating when drying or after drying to cause the resin to foam, and resin foaming consisting of impregnating a mechanically foamed resin. This is carried out for the purpose of improving manual tearability of the tape by reducing gaps in the fibers that compose the base fabric, preventing penetration of a processing agent into the base fabric in the case of coating a release agent or adhesive onto the surface of a tape substrate sheet, improving the strength of the base fabric, and imparting thickness to the tape.

The foaming agent added to the synthetic resin is preferably in the form of microcapsules capable of expanding by being heated to a temperature of 50°C to 200°C and particularly preferably that which is able to expand in a heat drying step carried out after coating, and that which expands at a lower temperature is preferable from the viewpoint of preventing heat shrinkage and heat deterioration of the tape substrate sheet. In addition, a method consisting of incorporating a chemical reaction-type foaming agent that generates a gas by causing thermal degradation or a chemical reaction on its own such as an azo-based, sulfonyl hydrazide-based, nitroso-based or inorganic foaming agent, a method consisting of incorporating air bubbles directly by rapidly volatilizing a solvent or dispersion medium during drying, or a method consisting of causing expansion in a liquid state by a factor of 1.5 to 10 and preferably a factor of 2 to 6 by mechanical foaming and the like, can also be used.

The addition rate of heat-expandable microcapsules is selected from within the range of 1% by weight to 50% by weight, preferably 1.5% by weight to 20% by weight, and more preferably 2% by weight to 10% by weight, based on the synthetic resin, while the addition rate of a chemical reaction-type foaming agent is selected from within the range of 0.1% by weight to 20% by weight, preferably 0.5% by weight to 10% by weight, and more preferably 1% by weight to 5% by weight.

Incorporation of a filler, pigment, ultraviolet absorber or anti-aging agent in the aforementioned synthetic resin is preferable since deterioration of the tape substrate sheet and adhesive layer is prevented as a result of blocking out ultraviolet rays and heat.

In addition, synthetic resins having a functional group may be crosslinked by using in combination with various crosslinking agents capable of reacting with that functional group, examples of which include metal compounds, amino compounds, epoxy compounds and isocyanato compounds. One type of crosslinking agent may be used alone or two or more types may be used in combination corresponding to each crosslinking agent, and carrying out crosslinking increases interlayer strength and improves repeelability of the tape.

Impregnation treatment can be carried out by impregnating a resin into the base fabric by a method such as immersion, roll coating or comma coating and removing water by applying pressure between a pair of rubber rollers or between a metal roller and a rubber roller followed by drying at a temperature of 50°C to 200°C. The impregnated amount of synthetic resin after drying is preferably 5% by weight to 150% by weight, more preferably 10% by weight to 150% by weight, even more preferably 15% by weight to 130% by weight and particularly preferably 20% by weight to 100% by weight based on the basis weight of the non-woven fabric. In the case the impregnated amount of synthetic resin is less than 5% by weight, there is little reduction in the gaps in the fibers, thereby resulting in increased susceptibility to permeation of resin to the back side. Although it is difficult in terms of the production process to make the ratio of the impregnated amount of synthetic resin exceed 150% by weight, in the case of using a resin having a high glass transition temperature above 20°C, flexibility is impaired which tends to decrease the followability of irregular and rough surfaces during use as a tape.

Although there are no particular limitations on fillers and pigments used in the present invention, examples thereof include inorganic fillers and pigments such as calcium carbonate or titanium oxide, and organic fillers and pigments such as phthalocyanine blue or lake pigment. One type of these may be used alone or two or more types may be used in combination, and they can be suitably incorporated in the impregnated resin within a range that does not impair the texture of the tape substrate sheet.

Although there are no particular limitations on ultraviolet absorbers and anti-aging agents used in the present invention, examples of ultraviolet absorbers include salicylic acid derivatives, benzophenone-based ultraviolet absorbers and benzotriazole-based ultraviolet absorbers, while examples of anti-aging agents include naphthylamine-based agents, p-phenylenediamine-based agents, amine mixtures, other amine-based agents, quinoline-based agents, hydroquinone derivatives, monophenol-based agents, bis- and tris-polyphenol-based agents, thiobisphenol-based agents, hindered phenol-based agents and phosphorous acid ester-based agents. One type of these ultraviolet absorbers and anti-aging agents may be used alone or two or more types may be used in combination. The incorporated amount thereof is normally selected within the range of 0.05 parts by weight to 5 parts by weight based on 100 parts by weight of the impregnated resin. These ultraviolet absorbers and anti-aging agents are preferably used since they improve weather resistance of the tape in applications such as outdoor applications in which the tape is exposed to sunlight for extended periods of time.

A top coat layer can be provided on one side or both sides of the tape substrate sheet obtained by impregnating a synthetic resin into the tape base fabric used in the present invention by coating with a somewhat hard synthetic resin. Coating with a top coat layer enables processing of the following step to be carried out more efficiently, while also demonstrating effects that inhibit scuffing of the tape back surface and impart manual tearability, thereby making this preferable. The synthetic resin used for coating is, for example, a synthetic resin having a glass transition temperature of 0°C to 40°C and preferably 5°C to 30°C, and more specifically, consists of one or more types selected from natural rubber, synthetic rubber, (meth)acrylic acid ester copolymer, ethylene-vinyl acetate copolymer, polyvinyl acetate and polyvinyl chloride. The coated amount of the synthetic resin after drying is preferably 2 $g/m^2$ to 15 $g/m^2$, more preferably 3 $g/m^2$ to 13 $g/m^2$ and particularly preferably 5 $g/m^2$ to 10 $g/m^2$.

All conventional adhesives can be used for the adhesive coated onto one side of the tape substrate sheet used in the present invention, and is used by dissolving or dispersing in a solvent (including water). Alternatively, although it is also used by lowering the viscosity to a state that allows it to be coated by heating, there are no restrictions on the usage form thereof. More specifically, one type selected from rubber-based adhesives, acrylic-based adhesives, silicone-based adhesives and urethane-based adhesives can be used. The coated amount of the adhesive is preferably 5 $g/m^2$ to 100 $g/m^2$, more preferably 15 $g/m^2$ to 80 $g/m^2$ and particularly preferably 20 $g/m^2$ to 60 $g/m^2$.

The rubber-based adhesive may be any type thereof provided it is a conventionally known rubber-based adhesive, examples of which include natural rubber, butyl rubber, butadiene rubber, isobutylene rubber, styrene-butadiene copolymer rubber, styrene-butadiene-styrene copolymer rubber, styrene-isoprene copolymer rubber, styrene-isoprene-styrene copolymer rubber, acrylonitrile-butadiene copolymer rubber, acrylonitrile-butadiene-isoprene copolymer rubber, methyl methacrylate-grafted natural rubber, styrene-grafted natural rubber, acrylonitrile-grafted natural rubber, synthetic isoprene rubber, ethylene-propylene copolymer rubber, ethylene-propylene-diene copolymer rubber, ethylene-vinyl acetate copolymer rubber, ethylene-acrylic acid ester copolymer rubber, ethylene-acrytonitrile copolymer rubber, butadiene-(meth)acrylic acid ester copolymer rubber, polyether urethane rubber, polyester urethane rubber, liquid isoprene rubber, liquid butadiene, liquid styrene-butadiene copolymer rubber, liquid acrylonitrile-butadiene copolymer rubber and liquid oxopropylene rubber.

Examples of acrylic-based adhesives include polymers obtained by polymerizing (A) 85% by weight to 98.9% by weight of an acrylic acid alkyl ester in which the number of carbon atoms of the alkyl group is 4 to 12 and/or a methacrylic acid alkyl ester in which the number of carbon atoms of the alkyl group is 4 to 18, and (B) 15% by weight to 1.1% by weight of a monomer mixture composed of 0.1% by weight to 5% by weight of an $\alpha,\beta$-unsaturated carboxylic acid, or a monomer mixture obtained by blending a monomer able to copolymerize with these components in an amount not exceeding 40 parts by weight based on 100 parts by weight of the monomer mixture.

Examples of silicone-based adhesives include silicone-based adhesives in the form of raw rubber-like diorganopolysiloxanes having an average of one or more silicon atom-bonding alkenyl groups in a molecule thereof.

When producing the adhesive tape of the present invention, various types of additives such as fillers, pigments, ultraviolet absorbers and anti-aging agents in the manner of those used in the aforementioned impregnated resin, as well as known adhesiveness-imparting resins, plasticizers and crosslinking agents, can be contained as necessary in rubber-based adhesives, acrylic-based adhesives, silicone-based adhesives and urethane-based adhesives able to be applied to the tape substrate sheet within a range that does not impair the effects of the present invention.

Furthermore, in the case of adhesive tape used in cold climates, adhesives and additives are preferably selected by, for example, selecting a resin that demonstrates adhesive strength in cold climates or adjusting the additives used.

In addition, a resin that imparts adhesiveness can be used as an adhesive, and although there are no particular limitations on the adhesiveness-imparting resin, examples thereof include terpene-based resins, terpene phenol-based resins, phenol-based resins, aromatic hydrocarbon-modified terpene resins, rosin-based resins, modified rosin-based resins, aliphatic synthetic petroleum-based resins, aromatic synthetic petroleum-based resins, alicyclic synthetic petroleum-based resins, coumarone-indene resins, xylene resins, styrene-based resins and dicyclopentadiene resins, and among these resins, examples include hydrogenation products of resins having a hydrogenatable unsaturated double bond. One type of these adhesiveness-imparting resins may be used alone or two or more types may be used in combination.

When producing the adhesive tape of the present invention, a commonly used method can be used to coat an adhesive able to be applied to a tape substrate sheet on the substrate sheet, examples of which include gravure coating, roll coating, reverse coating, doctor blade coating, bar coating, comma coating, die coating, lip coating and knife coating. Among these, die coating and comma coating are preferable. After coating, the solvent or dispersion medium is dried by heating with hot air, (near) infrared light or high-frequency energy and the like. Although adhesiveness to irregular surfaces and dust surfaces of a size close to the thickness of the adhesive layer tends to be poor if the thickness of the adhesive layer is reduced, this can be compensated for to a certain extent by using a thin, flexible tape substrate sheet.

Adhesive tape using a long fiber non-woven fabric produced according to spunbonding of the present invention makes it possible to increase the flexibility of the substrate sheet as well as the thickness of adhesive layer, improve followability of irregular, rough surfaces and increase adhesive strength. Examples of methods used to increase thickness of the adhesive layer include chemical methods, such as a method consisting of incorporating a foaming agent that generates a gas by causing thermal degradation or a chemical reaction on its own, such an azo-based, sulfonyl hydrazide-based, nitroso-based or inorganic foaming agent, or a method consisting of incorporating heat-foamable or heat-expandable microcapsules, and physical methods, such as a method consisting of incorporating air bubbles directly that are generated by rapidly volatilizing a solvent or dispersion medium during drying, or a method consisting of forming bubbles mechanically by vigorously stirring a pressure-sensitive adhesive blend prior to coating.

There are no particular limitations on the release agent used in the tape substrate sheet of the present invention, and examples thereof are indicated below. For example, a silicone-based release agent, long-chain alkyl-based release agent, wax-based release agent or fluorine-based release agent is used preferably.

Coating of the release agent used in the present invention is carried out for the purpose of winding onto a roll on the opposite side from the side subjected to adhesive processing (back side) and facilitating smooth deployment at the time of use. In other words, a release agent is selected that is able to reliably maintain adhesive strength when not used (during storage), and enables adhesive strength to decrease during deployment when using the tape to allow work to be performed rapidly.

When selecting the release agent, only one type of the aforementioned release agents may be used or two or more types may be used in combination. In addition, with respect to release agents having a functional group, a crosslinking agent is used that reacts with that functional group, and examples of such crosslinking agents include metal compounds, amino compounds, epoxy compounds and isocyanate compounds. Furthermore, one type of crosslinking agent is used or two or more types are used in combination. Crosslinking the release agent mainly improves solvent resistance, durability and substrate adhesiveness. The coated amount of the release agent based on the dry weight thereof is preferably 0.01 $g/m^2$ to 10 $g/m^2$, more preferably 0.05 $g/m^2$ to 8 $g/m^2$ and particularly preferably 0.1 $g/m^2$ to 6 $g/m^2$.

Furthermore, peelability of the adhesive tape of the present invention is such that peel force at low speeds is strong while peel force at high speeds as used in the work setting is low, thereby resulting in superior workability.

In the case of using on a building member, construction member or interior member and the like, the adhesive strength of the adhesive tape of the present invention is such that it can be securely adhered to a target object, and can be rapidly deployed without adhesive remaining on the peeled surface during peeling. Thus, the adhesive strength with respect to SUS is preferably 0.5 N/10 mm or more, more preferably 0.7 N/10 mm to 10 N/10 mm, and particularly preferably 1.0 N/10 mm to 7 N/10 mm. If adhesive strength with respect to SUS is 0.5 N/10 mm or less, adhesive strength becomes weak, the tape peels easily and workability decreases.

The adhesive tape of the present invention has flexibility and followability of rough surfaces containing surface irregularities. Low intermediate stress during elongation is preferable as a characteristic indicative of the flexibility of adhesive tape. Thus, stress during elongation by 5% is preferably 30 N/10 mm or less, more preferably 2 N/10 mm to 25 N/10 mm, particularly preferably 20 N/10 mm or less, for example, 4 N/10 mm to 20 N/10 mm, and most preferably 4 N/10 mm to 16 N/10 mm. If stress during elongation by 5% exceeds 30 N/10 mm, texture becomes hard and both flexibility and followability of rough surfaces decrease.

Moreover, when peeling off the adhesive tape, it is essential that the tape have strength that enables it to be peeled without tearing, and for example, the tensile strength of the adhesive tape is preferably 5 N/10 mm or more, more preferably 7 N/10 mm to 100 N/10 mm, and particularly preferably 10 N/10 mm to 80 N/10 mm. Moreover, the elongation at break is preferably 10% or more, more preferably 12% to 60%, and particularly preferably 15% to 50%.

In measuring the followability of the adhesive tape of the present invention with respect to rough surfaces having an irregular shape, the degree to which the adhesive tapes follows the shape of an adherend was observed immediately after and 1 hour after making the tape completely follow the surface of an adherend using a lysine spray-coated surface obtained by suitably treating an aggregate having a primary particle size of 2 mm to 3 mm, followed by evaluating that followability based on prescribed evaluation criteria.

The rigidity of the adhesive tape of the present invention, and typically masking tape and curing tape, is such that the average value of flexural rigidity when bending to the front and back sides in the lengthwise direction as measured with the Kawabata Evaluation System (KES) is selected to be within the range of 0.1 mN·$cm^2$/cm to 5.0 mN·$cm^2$/cm and preferably 0.1 mN·$cm^2$/cm to 2.5 mN·$cm^2$/cm, while the average value of flexural rigidity when bending to the front and back sides in the widthwise direction is selected to be within the range of 0.1 mN·$cm^2$/cm to 3.0 mN·$cm^2$/cm and preferably 0.1 mN·$cm^2$/cm to 2.0 mN·$cm^2$/cm.

In the case the average value of flexural rigidity when bending to the front and back sides in the lengthwise direction as determined by KES measurement is less than 0.1 mN·$cm^2$/cm, the tape becomes too flexible, thereby causing the tape to twist during application and become difficult to apply, while in the case the value exceeds 5.0 mN·$cm^2$/cm, followability becomes inadequate.

In the case the average value of flexural rigidity when bending to the front and back sides in the widthwise direction as determined by KES measurement is less than 0.1 mN·$cm^2$/cm, tape rigidity becomes insufficient, thereby causing the tape to twist during application and become difficult to apply, while in the case the value exceeds 3.0 mN·$cm^2$/cm, followability becomes inadequate.

Furthermore, the measuring instrument used to measure flexural rigidity when bending to the front and back sides of the tape substrate was the KES-FB2 Pure Bending Tester manufactured by Kato Tech Co., Ltd., and measurements were carried out at a temperature of 20°C and humidity of 65%.

KES measurement refers to measuring the bending characteristics of a fabric with a portion of the Fabric Testing System KES-FB Series (Kawabata Evaluation System for Fabrics) designed for measuring texture as described in Sueo Kawabata, Journal of the Textile Machinery Society of Japan (Textile Engineering), Vol. 26, No. 10, pp. 721-728 (1973).

This KES-FB2 Pure Bending Tester (Kato Tech Co., Ltd.) is able to bend an entire sample at a constant curvature in the shape of an arc and vary the curvature thereof at a uniform velocity, followed by detecting minute changes in the bending moment accompanying that bending and measuring the relationship between bending moment and curvature. Furthermore, the maximum curvature K is $\pm 2.5$ cm$^{-1}$, the clamp interval (sample length) is 1 cm, and the bending deformation velocity is 0.5 cm$^{-1}$/sec.

Flexural rigidity indicates the slope (g·cm$^2$/cm) of an M-K curve at the increment of the bending moment M (g·cm/cm, value per unit length) with respect to an increase in curvature K (cm$^{-1}$). This flexural rigidity is measured at two locations between K = 0.5 and K = 1.5 and between K = -0.5 and K = -1.5, followed by respectively determining the average value of the slope of frontward bending (bending such that the front surface is on the outside) and backward bending (bending such that the back surface is on the outside).

Manual tearability of the adhesive tape of the present invention is such that initial tear strength as measured using a method in compliance with the trapezoid method of JIS-L-1913 is 12 N/25 mm or less, preferably 1 N/25 mm to 10 N/25 mm and more preferably 2 N/25 mm to 7 N/25 mm. In addition, tear strength over time is 7 N/25 mm or less, preferably 1 N/25 mm to 6 N/25 mm, and more preferably 1 N/25 mm to 5 N/25 mm.

If initial tear strength exceeds 12 N/25 mm, it becomes difficult to tear the tape along a straight line in the direction of width or diagonal tearing occurs easily in the lengthwise direction of the embossing interval, thereby resulting in poor manual tearability.

Thus, the value of initial tear strength is decreased in order to enable manual tearing to be carried out favorably.

The adhesive tape of the present invention can be used as masking tape and curing tape by winding onto a roll. In addition, a masker can be composed using the adhesive tape of the present invention.

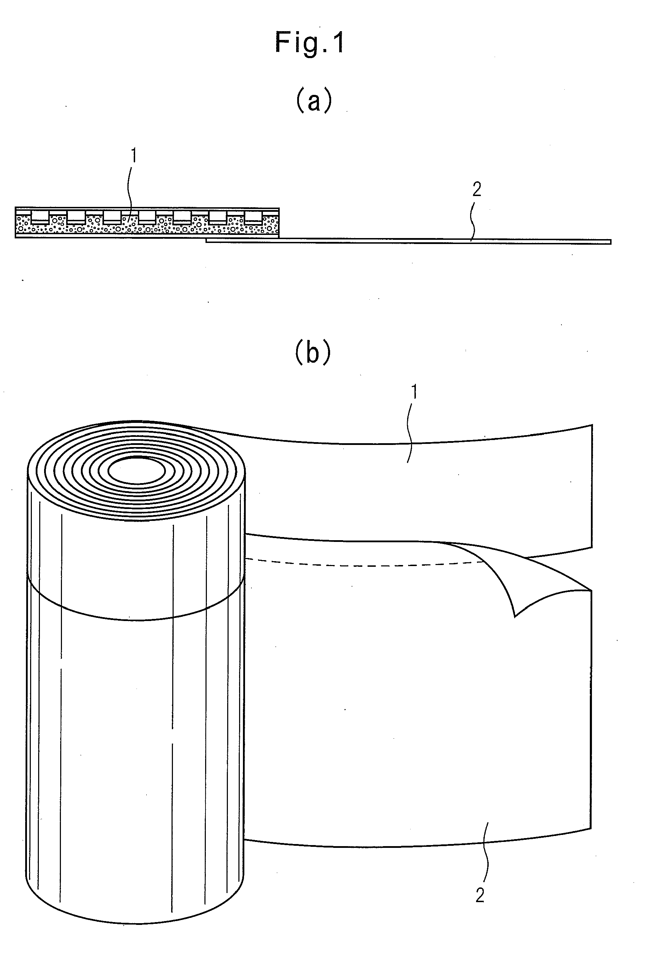

As shown in the cross-sectional view (a) and schematic diagram of a finished product (b) of FIG. 1, a masker that uses the adhesive tape of the present invention is obtained by adhering a curing sheet to the end portion on one side in the lengthwise direction of an adhesive layer, integrating the adhesive tape and curing sheet into a single unit, and winding the entirety into the shape of a roll to obtain the masker of the present invention. More specifically, the curing sheet is adhered at a location covering 10% to 50%, and preferably 10% to 30%, of the total width of the adhesive layer of the adhesive tape. The thickness of the curing sheet used in the form of a polyethylene film, polypropylene film or Kraft paper and the like is 5 $\mu$m to 100 $\mu$m and preferably 5 $\mu$m to 70 $\mu$m, and the width is 200 mm to 3000 mm and preferably 300 mm to 2000 mm.

The masker of the present invention consists of integrating an adhesive tape and curing sheet into a single unit, folding 2 to 20 sheets of the curing sheet portion, and winding into the shape of a roll on a paper core at a length of 10 m to 200 m and preferably 20 m to 100 m.

Examples

Although the following provides a more detailed explanation of the present invention through examples thereof, the present invention is not limited to only these examples.

The methods used to measure various characteristic values in the present invention are as indicated below.

(1) Basis weight (g/m$^2$): Measured in compliance with JIS-L-1913.

(2) Thickness (mm): Measured in compliance with JIS-L-1913A.

(3) Fiber diameter ($\mu$m): An enlarged photograph is taken at a magnification of 500X with a microscope followed by measuring 10 random fibers and indicating as the average value thereof.

(4) Tensile strength, stress during 5% elongation (N/10 mm) and elongation at break: Measured and determined using a constant length tensile strength tester in compliance with JIS-L-1913. Three samples measuring 25 mm wide and 300 mm long are sampled in the lengthwise direction (machine direction) followed by measurement of stress during 5% elongation, tensile strength at break and elongation at break at a clamp interval of 200 mm and tension speed of 100 mm/min, and indicating the respective average values thereof.

(5) SUS adhesive strength: 180 degrees peel adhesive strength with respect to an SUS sheet is determined in compliance with JIS-Z-0237.

(6) Rough surface followability 1 (when adhering): Using a test piece measuring 15 mm wide and 300 mm long and using an aggregate having a primary particle size of 2 mm to 3 mm suitably treated by spray coating the surface thereof for the adherend, ease of adhesion (ease of following) when adhering so as to completely follow the surface of the adherend under conditions of a temperature of 23°C and humidity of 50% RH is evaluated by the measuring person and evaluated according to the criteria indicated below.

A: Extremely good
B: Good
C: Average

D: Poor

(7) Rough surface followability 2 (over time after adhering): The degree to which the test piece follows the surface of the adherend one hour after adhering thereto is observed and evaluated according to the criteria indicated below.

    A: Extremely good, no changes at all after adhering, and follows the surface of the adherend
    B: Hardly any change from immediately after adhering and follows the surface of the adherend.
    C: Test piece partially lifts from indentations.
    D: Test piece completely lifts from indentations.

(8) Manual tearability: Using a test piece measuring 25 mm wide and 300 mm long in the lengthwise direction (machine direction), the torn state when the test piece is torn by hand in a direction perpendicular to the machine direction is evaluated according to the criteria indicated below.

    A: Extremely good
    B: Good
    C: Average
    D: Poor (test piece tears in machine direction)

(9) Flexural rigidity (mN·cm$^2$/cm) : The KES-FB2 measuring instrument is able to bend an entire sample at a constant curvature in the shape of an arc and vary the curvature thereof at a uniform velocity, followed by detecting minute changes in the bending moment accompanying that bending and measuring the relationship between bending moment (mN·cm/cm) and curvature (cm$^{-1}$). Three samples each measuring 2.5 cm wide and 1.0 cm long are respectively sampled from the lengthwise direction and widthwise direction followed by measurement of flexural rigidity (bending moment/curvature). Furthermore, the maximum curvature K is $\pm$2.5 cm$^{-1}$, the clamp interval (sample length) is 1 cm, and the bending deformation velocity is 0.5 cm$^{-1}$/sec.
(10) Masker processing suitability: The finished state of a 25 m masker roll finished using a masker processing machine is evaluated according to the criteria indicated below.

    A: Absence of gaps
    B: Hardly any gaps
    C: Some gaps but not conspicuous
    D: Conspicuous presence of gaps

(11) Indentation impression depth ratio (%): Determined according to the equation indicated below from the thickness A of the embossed portion and thickness B at an indentation in the embossed portion shown in FIG. 2 as determined from an enlarged cross-sectional photograph.

$$\texttt{Impression depth ratio (\%) = [(A-B)/A]} \times \texttt{100}$$

(12) Tear strength (N/25 mm): Measured in compliance with the trapezoid method of JIS-L-1913. A sample measuring 25 mm in the widthwise direction x 80 mm in the lengthwise direction is sampled and then measured with a tensile strength tester at a clamp interval of 10 mm and tension speed of 500 mm/min followed by determining the initial value and average value over time. FIG. 3 is a model diagram of measurement results when having measured tear strength in compliance with the trapezoid method of JIS-L-1913. Initial tear strength indicates the maximum value of the rise during initial measurement as indicated by $F_1$ in FIG. 3. The average value over time is the average value of 3 maximum peaks (indicated by $F_2$, $F_3$ and $F_4$ in the diagram) of tear strength following the initial rise.
(13) Production processing suitability: Status during synthetic resin impregnation processing, adhesive coating processing and release agent coating processing are evaluated according to the criteria indicated below.

    A: Processing possible without any problems
    B: Processing possible with some problems
    C: Processing unable to continue due to width shrinkage or permeation of resin to back side

[Example 1]

(Production of Tape Substrate Sheet)

A polypropylene long fiber web composed of a single layer having a fiber diameter of 18 μm obtained by spunbonding was deposited on a net conveyor and thermocompression bonded by a pair of embossing rollers to obtain a polypropylene long fiber non-woven fabric having a basis weight at a partial thermocompression bonding ratio of 8% of 40 g/m$^2$ and thickness of 310 μm. Next, calendering was carried out under conditions of a temperature of 80°C and linear pressure of 300 N/cm to finish to a thickness of 120 μm, and embossing (width: 0.3 mm × embossing interval: 3 mm) was carried out in the form of a solid line in the widthwise direction of the tape under conditions of a temperature of 80°C and linear pressure of 300 N/cm, followed by carrying out resin impregnation treatment. Furthermore, the angle of the solid line embossing was 0.2 degrees with respect to the rotational axis of the rollers. An aqueous acrylic resin (Nikazol FA-2555A, Nippon Carbide Industries) having a glass transition temperature of -17°C was used for the synthetic resin, and impregnation treatment was carried out by subjecting to immersion, dehydration and drying steps so that the amount of resin after drying was 20 g/m$^2$ to obtain a tape substrate sheet a.

(Preparation of Adhesive)

After dissolving 100 g of natural rubber, adjusted to a Mooney viscosity of 60 by kneading, in 830 g of toluene, 50 g of YS Resin PX1000 (Yasuhara Chemical), 20 g of Daimaron (Yasuhara Chemical) and 1 g of Antage W-400 anti-aging agent (Kawaguchi Chemical Industry) were added followed by dissolving well to obtain an adhesive a having a solid content of 17% and viscosity at 23°C of 9800 mPa·s.

(Coating of Adhesive and Release Agent)

The adhesive a was coated onto one side of the aforementioned tape substrate sheet a so that the coated amount after drying was 40 g/m$^2$, while a release agent in the form of Peeloil 1010 (Ipposha Oil Industries) was coated onto the opposite side so that the coated amount after drying was 0.3 g/m$^2$ to obtain the adhesive tape of the present invention.
The results of evaluating the resulting adhesive tape are shown in Table 1 along with the properties of the non-woven fabric, tape base fabric and tape substrate sheet.

[Example 2]

(Production of Tape Substrate Sheet)

A four-layer laminated web (SMMS), consisting of a polypropylene fiber non-woven fabric (S) having a fiber diameter of 18 μm and basis weight of 11 g/m$^2$ obtained by spunbonding for the top and bottom layers, and a polypropylene microfiber non-woven fabric (M) having a fiber diameter of 4 μm and a basis weight of 1.5 g/m$^2$ obtained by melt blowing for the two intermediate layers, was thermocompression bonded to obtain a multilayer, laminated long fiber non-woven fabric having a partial thermocompression bonding ratio of 14%, a basis weight of 25 g/m$^2$ and a thickness of 240 μm. Next, after calendering under conditions of a temperature of 20°C and linear pressure of 300 N/cm to obtain a thickness of 80 μm, embossing in the form of a solid line and impregnation treatment were carried out in the same manner as Example 1. The same resin as that used in Example 1 was used for the synthetic resin and the resin was impregnated so that the amount of resin after drying was 15 g/m$^2$ to obtain a tape substrate sheet b.

(Coating of Adhesive and Release Agent)

Adhesive a was coated onto one side of the aforementioned tape substrate sheet b at 40 g/m$^2$ and a release agent in the form of Peeloil 1010 (Ipposha Oil Industries) was coated onto the opposite side at 0.3 g/m$^2$ in the same manner as Example 1 to obtain the adhesive tape of the present invention.
The results of evaluating the resulting adhesive tape are shown in Table 1 along with the properties of the non-woven fabric, tape base fabric and tape substrate sheet.

[Example 3]

(Production of Tape Substrate Sheet)

Tape substrate sheet c was obtained by coating Nipol LX430 (Zeon) having a glass transition temperature of 12°C onto the side coated with a release agent of tape base fabric b obtained in the same manner as Example 2 so that the coated amount after drying was 5 g/m$^2$.

(Coating of Adhesive and Release Agent)

The same adhesive a as Example 1 was coated onto the side coated with an adhesive of the aforementioned tape substrate sheet c at 40 g/m$^2$ and a release agent in the form of Peeloil 1010 (Ipposha Oil Industries) was coated onto the side coated with a release agent at 0.1 g/m$^2$ to obtain the adhesive tape of the present invention.
The results of evaluating the resulting adhesive tape are shown in Table 1 along with the properties of the non-woven fabric, tape base fabric and tape substrate sheet.

[Example 4]

A long fiber web having a fiber diameter of 14 $\mu$m obtained by spunbonding polyethylene terephthalate (PET, melting point: 265°C) was thermocompression bonded to obtain a polyester long fiber non-woven fabric having a partial thermocompression bonding ratio of 20%, basis weight of 20 g/m$^2$ and thickness of 120 $\mu$m. Next, calendering was carried out under conditions of a temperature of 150°C and pressure of 300 N/cm to obtain a thickness of 80 $\mu$m, and after embossing in the form of a broken line (width: 0.3 mm $\times$ embossing interval: 3 mm, ratio of embossed portion to non-embossed portion: 2:1) in the widthwise direction of the tape under conditions of a temperature of 160°C and linear pressure of 300 N/cm, impregnation treatment was carried out on synthetic resin. Furthermore, the angle of the broken line embossing was 0.2 degrees with respect to the rotational axis of the rollers. Resin impregnation was carried out in the same manner as Example 1 with the exception of using Nipol LX438C (Zeon) having a glass transition temperature of 1°C for the impregnated resin to obtain tape substrate sheet d by impregnating so that the amount of resin after drying was 15 g/m$^2$.

(Coating of Adhesive and Release Agent)

The same adhesive a as Example 1 was coated onto one side of the aforementioned tape substrate sheet d at 40 g/m$^2$ and the same release agent as Example 1 in the form of Peeloil 1010 (Ipposha Oil Industries) was coated onto the opposite side at 0.2 g/m$^2$ to obtain the adhesive tape of the present invention.
The results of evaluating the resulting adhesive tape are shown in Table 1 along with the properties of the non-woven fabric, tape base fabric and tape substrate sheet.

[Example 5]

(Production of Tape Substrate Sheet)

Tape substrate sheet e was obtained by coating Nipol LX430 (Zeon) having a glass transition temperature of 12°C onto the side coated with a release agent of the tape substrate sheet d obtained in the same manner as Example 4 so that the coated amount after drying was 5 g/m$^2$.

(Coating of Adhesive and Release Agent)

The same adhesive a as Example 1 was coated onto the side coated with an adhesive of the aforementioned tape substrate sheet e at 10 g/m$^2$ and a release agent in the form of Peeloil 1010 (Ipposha Oil Industries) was coated onto the side coated with a release agent at 0.05 g/m$^2$ to obtain the adhesive tape of the present invention.
The results of evaluating the resulting adhesive tape are shown in Table 1 along with the properties of the non-woven fabric, tape base fabric and tape substrate sheet.

[Example 6]

(Production of Tape Substrate Sheet)

Tape substrate sheet f was obtained in the same manner as Example 1 with the exception of using an aqueous SBR resin in the form of Nipol LX110 (Zeon) having a glass transition temperature Tg of -47°C for the impregnated resin.

(Coating of Adhesive and Release Agent)

The same adhesive a as Example 1 was coated onto one side of the aforementioned tape substrate sheet f at 40 g/m² and a release agent in the form of Peeloil 1010 (Ipposha Oil Industries) was coated onto the opposite side at 0.5 g/m² to obtain the adhesive tape of the present invention.
The results of evaluating the resulting adhesive tape are shown in Table 1 along with the properties of the non-woven fabric, tape base fabric and tape substrate sheet.
[Table 1]

Table 1

| Example | | 1 | 2 | 3 | 4 | 5 | 6 |
|---|---|---|---|---|---|---|---|
| Fiber material | | PP | PP | PP | PET | PET | PP |
| Fiber diameter | μm | 18 | 4/18 | 4/18 | 14 | 14 | 18 |
| Basis weight | g/m² | 40 | 25 | 25 | 20 | 20 | 40 |
| Tg | °C | -17 | -17 | -17 | 1 | 1 | -47 |
| Amt. of impregnated resin | g/m² | 20 | 15 | 15 | 15 | 15 | 20 |
| Adhesive type | | Natural rubber | Natural rubber | Natural rubber | Natural rubber | Natural rubber | Natural rubber |
| Amt. of adhesive | g/m² | 40 | 40 | 40 | 40 | 10 | 40 |
| Amt. of release agent | g/m² | 0.3 | 0.3 | 0.1 | 0.2 | 0.05 | 0.5 |
| Top coat treatment | | No | No | Yes | No | Yes | No |
| Calendering | | Yes | Yes | Yes | Yes | Yes | Yes |
| Widthwise embossing | | Yes | Yes | Yes | Yes | Yes | Yes |
| Non-woven fabric thickness | mm | 0.12 | 0.08 | 0.08 | 0.08 | 0.08 | 0.12 |
| Tape thickness | mm | 0.15 | 0.11 | 0.11 | 0.11 | 0.09 | 0.15 |
| Elongation stress (5%) | N/10 mm | 10 | 5 | 5 | 12 | 13 | 10 |
| Tensile strength at break | N/10 mm | 25 | 13 | 14 | 25 | 27 | 27 |
| Elongation at break | % | 45 | 35 | 37 | 30 | 32 | 46 |
| Flexural rigidity (mNcm²/cm) | Lengthwise | 1.3 | 0.8 | 1.0 | 1.2 | 1.3 | 1.2 |
| | Widthwise | 0.5 | 0.2 | 0.3 | 0.4 | 0.6 | 0.5 |
| SUS adhesive strength | N/10 mm | 2.1 | 2.0 | 2.1 | 2.1 | 2.2 | 2.1 |
| Rough surface followability (initial) | | B | A | A | B | B | B |
| Rough surface followability (over time) | | B | A | A | B | B | B |
| Widthwise embossing angle (degrees) | | 0.2 | 0.2 | 0.2 | 0.2 | 0.2 | 0.2 |
| Widthwise embossing impression de | depth ratio (%) | 67 | 69 | 69 | 70 | 70 | 67 |

(continued)

| Example | | 1 | 2 | 3 | 4 | 5 | 6 |
|---|---|---|---|---|---|---|---|
| Fiber material | | PP | PP | PP | PET | PET | PP |
| Tear strength (initial) | N/25 mm | 8.5 | 8.1 | 7.8 | 7.0 | 6.8 | 8.7 |
| Tear strength (over time) | N/25 mm | 4.6 | 4.2 | 3.8 | 3.8 | 3.5 | 4.8 |
| Manual tearability | | B | B | A | B | A | B |
| Production processing suitability | | B | B | B | B | B | B |

[Example 7]

(Production of Tape Substrate Sheet)

Tape substrate sheet g was obtained in the same manner as Example 1 with the exception of changing the amount of impregnated resin after drying to 40 g/m$^2$.

(Coating of Adhesive and Release Agent)

The same adhesive a as Example 1 was coated onto one side of the aforementioned tape substrate sheet g at 15 g/m$^2$ and a release agent in the form of Peeloil 1010 (Ipposha Oil Industries) was coated onto the opposite side at 0.1 g/m$^2$ to obtain the adhesive tape of the present invention.
The results of evaluating the resulting adhesive tape are shown in Table 2 along with the properties of the non-woven fabric, tape base fabric and tape substrate sheet.

[Example 8]

(Production of Tape Substrate Sheet)

Tape substrate sheet a was obtained in the same manner as Example 1.

(Preparation of Adhesive)

0.1 g of Tetrad C (Mitsubishi Gas Chemical) was added to 100 g of Polythick 430SA (Sanyo Chemical Industries) and stirred well to obtain a solvent-based acrylic adhesive b having a solid content of 50% and viscosity at 23°C of 25000 mPa·s.

(Coating of Adhesive and Release Agent)

Adhesive b was coated onto one side of the same tape substrate sheet a as Example 1 at 40 g/m$^2$, and a release agent in the form of Peeloil 1010 (Ipposha Oil Industries) was coated onto the opposite side at 0.5 g/m$^2$ to obtain the adhesive tape of the present invention.
The results of evaluating the resulting adhesive tape are shown in Table 2 along with the properties of the non-woven fabric, tape base fabric and tape substrate sheet.

[Example 9]

(Production of Tape Substrate Sheet)

Tape substrate sheet a was obtained in the same manner as Example 1.

(Coating of Adhesive and Release Agent)

The same adhesive a as Example 1 was coated onto one side of the aforementioned tape substrate sheet a at 60 g/m$^2$ and a release agent in the form of Peeloil 1010 (Ipposha Oil Industries) was coated onto the opposite side at 1.0 g/m$^2$ to obtain the adhesive tape of the present invention.

The results of evaluating the resulting adhesive tape are shown in Table 2 along with the properties of the non-woven fabric, tape base fabric and tape substrate sheet.

[Example 10]

(Production of Tape Substrate Sheet)

Tape substrate sheet a was obtained in the same manner as Example 1.

(Coating of Adhesive and Release Agent)

The same adhesive a as Example 1 was coated onto one side of the aforementioned tape substrate sheet a at 30 g/m$^2$ and a release agent in the form of Peeloil HT (Ipposha Oil Industries) was coated onto the opposite side at 3.0 g/m$^2$ to obtain the adhesive tape of the present invention.

The results of evaluating the resulting adhesive tape are shown in Table 2 along with the properties of the non-woven fabric, tape base fabric and tape substrate sheet.

[Comparative Example 1]

(Production of Tape Substrate Sheet)

A tape substrate sheet was obtained in the same manner as Example 1 with the exception of changing the basis weight to 70 g/m$^2$, the post-calendering thickness to 240 $\mu$m, and the impregnated amount of synthetic resin to 40 g/m$^2$.

(Coating of Adhesive and Release Agent)

Adhesive and release agent were coated onto the aforementioned tape substrate sheet in the same manner as Example 1 to produce an adhesive tape. The results of evaluating the resulting adhesive tape are shown in Table 2 along with the properties of the non-woven fabric, tape base fabric and tape substrate sheet.

[Comparative Example 2]

(Production of Tape Substrate Sheet)

A tape substrate sheet was obtained in the same manner as Example 1 with the exception of changing the basis weight to 70 g/m$^2$, the impregnated resin to an aqueous acrylic resin in the form of Nikazol FX-670 (Nippon Carbide Industries) having a glass transition temperature of 33°C, and the impregnated amount to 40 g/m$^2$.

(Coating of Adhesive and Release Agent)

Adhesive and release agent were coated onto the aforementioned tape substrate sheet in the same manner as Example 1 to produce an adhesive tape. The results of evaluating the resulting adhesive tape are shown in Table 2 along with the properties of the non-woven fabric, tape base fabric and tape substrate sheet.

[Table 2]

Table 2

| Example | | 7 | 8 | 9 | 10 | Comp.Ex.1 | Comp.Ex.2 |
|---|---|---|---|---|---|---|---|
| Fiber material | | PP | PP | PP | PP | PP | PP |
| Fiber diameter | $\mu$m | 18 | 18 | 18 | 18 | 20 | 20 |
| Basis weight | g/m$^2$ | 40 | 40 | 40 | 40 | 70 | 70 |
| Tg | °C | -17 | -17 | -17 | -17 | -17 | 33 |
| Amt. of impregnated resin | g/m$^2$ | 40 | 20 | 20 | 20 | 40 | 40 |

(continued)

| Example | | 7 | 8 | 9 | 10 | Comp.Ex.1 | Comp.Ex.2 |
|---|---|---|---|---|---|---|---|
| Fiber material | | PP | PP | PP | PP | PP | PP |
| Adhesive type | | Natural rubber | Acrylic | Natural rubber | Natural rubber | Natural rubber | Natural rubber |
| Amt. of adhesive | g/m² | 15 | 40 | 60 | 30 | 40 | 40 |
| Amt. of release agent | g/m² | 0.1 | 0.5 | 1.0 | 3.0 | 0.3 | 0.3 |
| Top coat treatment | | No | No | No | No | No | No |
| Calendering | | Yes | Yes | Yes | Yes | Yes | Yes |
| Widthwise embossing | | Yes | Yes | Yes | Yes | Yes | Yes |
| Non-woven fabric thickness | mm | 0.12 | 0.12 | 0.12 | 0.12 | 0.24 | 0.24 |
| Tape thickness | mm | 0.13 | 0.15 | 0.15 | 0.14 | 0.27 | 0.27 |
| Elongation stress (5%) | N/10 mm | 11 | 10 | 10 | 10 | 25 | 25 |
| Tensile strength at break | N/10 mm | 29 | 26 | 25 | 25 | 45 | 47 |
| Elongation at break | % | 47 | 45 | 45 | 45 | 45 | 47 |
| Flexural rigidity (mNcm²/cm) | Lengthwise | 1.4 | 1.3 | 1.3 | 1.3 | 3.7 | 5.0 |
| | Widthwise | 0.6 | 0.5 | 0.5 | 0.5 | 1.8 | 2.8 |
| SUS adhesive strength | N/10 mm | 1.9 | 2.0 | 2.5 | 2.1 | 1.9 | 2.1 |
| Rough surface followability (initial) | | B | B | A | B | C | D |
| Rough surface followability (over time) | | B | B | A | B | D | D |
| Manual tearability | | B | B | B | B | D | D |
| Production processing suitability | | B | B | B | B | B | B |

[Comparative Example 3]

(Production of Tape Substrate Sheet)

A tape substrate sheet was obtained in the same manner as Example 1 with the exception of changing the basis weight to 40 g/m² and without carrying out embossing in the form of a solid line in the widthwise direction.

(Coating of Adhesive and Release Agent)

Adhesive and release agent were coated onto the aforementioned tape substrate sheet in the same manner as Example 1 to produce an adhesive tape. The results of evaluating the resulting adhesive tape are shown in Table 3 along with the properties of the non-woven fabric, tape base fabric and tape substrate sheet.

[Comparative Example 4]

(Production of Tape Substrate Sheet)

A tape substrate sheet was obtained in the same manner as Example 4 with the exception of changing the basis weight to 70 g/m$^2$, the amount of impregnated resin to 40 g/m$^2$, and the impregnated resin to an aqueous acrylic resin in the form of Nikazol FX-670 (Nippon Carbide Industries) having a glass transition temperature of 33°C.

(Coating of Adhesive and Release Agent)

Adhesive and release agent were coated onto the aforementioned tape substrate sheet in the same manner as Example 1 to produce an adhesive tape. The results of evaluating the resulting adhesive tape are shown in Table 3 along with the properties of the non-woven fabric, tape base fabric and tape substrate sheet.

[Comparative Example 5]

No. 3372 (Sliontec) was used as an adhesive cloth tape having a staple fiber woven fabric for the substrate followed by evaluating in the same manner as Example 1. The evaluation results are shown in Table 3.

[Comparative Example 6]

Pyolan Y-09-GR (Diatex) was used as a flat yarn adhesive tape having a polyester woven fabric for the substrate followed by evaluating in the same manner as Example 1. The evaluation results are shown in Table 3.

[Table 3]

Table 3

| Example | | Comp. Ex. 3 | Comp. Ex. 4 | Comp. Ex. 5 | Comp. Ex. 6 |
|---|---|---|---|---|---|
| Fiber material | | PP | PET | Staple fiber woven fabric | PE woven fabric |
| Fiber diameter | μm | 18 | 14 | | |
| Basis weight | g/m$^2$ | 40 | 70 | | |
| Tg | °C | -17 | 33 | | |
| Amt. of impregnated resin | g/m$^2$ | 20 | 40 | | |
| Adhesive type | | Natural rubber | Natural rubber | | |
| Amt. of adhesive | g/m$^2$ | 40 | 40 | | |
| Amt. of release agent | g/m$^2$ | 0.3 | 0.3 | | |
| Top coat treatment | | No | No | | |
| Calendering | | Yes | Yes | | |
| Widthwise embossing | | No | Yes | | |
| Non-woven fabric thickness | mm | 0.12 | 0.21 | 0.20 | 0.12 |
| Tape thickness | mm | 0.15 | 0.24 | 0.25 | 0.16 |
| Elongation stress (5%) | N/10 mm | 10 | 44 | 43 | 25 |
| Tensile strength at break | N/10 mm | 25 | 82 | 55 | 60 |
| Elongation at break | % | 45 | 25 | 7 | 12 |
| Flexural rigidity (mNcm$^2$/cm) | Lengthwise | 1.3 | 5.5 | 3.8 | 4.5 |
| | Widthwise | 0.5 | 3.0 | 11.8 | 5.2 |
| SUS adhesive strength | N/10 mm | 2.2 | 2.4 | 3.1 | 5.2 |

(continued)

| Example | Comp. Ex. 3 | Comp. Ex. 4 | Comp. Ex. 5 | Comp. Ex. 6 |
|---|---|---|---|---|
| Rough surface followability (initial) | B | D | C | D |
| Rough surface followability (over time) | B | D | D | D |
| Manual tearability | D | D | B | B |
| Production processing suitability | B | B | - | - |

[Example 11]

(Production of Tape Substrate Sheet)

A polypropylene long fiber web composed of a single layer having a fiber diameter of 18 $\mu$m obtained by spunbonding was deposited on a net conveyor and thermocompression bonded by a pair of embossing rollers to obtain a polypropylene long fiber non-woven fabric having a basis weight at a partial thermocompression bonding ratio of 8% of 40 g/m$^2$ and thickness of 310 $\mu$m. Next, embossing (width: 0.3 mm x embossing interval: 3 mm) in the form of a solid line was carried out in the widthwise direction of the tape under conditions of a temperature of 80°C and linear pressure of 300 N/cm, followed by carrying out resin impregnation treatment. Furthermore, the angle of the solid line embossing was 1 degree with respect to the rotational axis of the rollers. An aqueous acrylic resin in the form of Nikazol FA-2555A (Nippon Carbide Industries) having a glass transition temperature of -17°C and incorporating 8% by weight of heat-expandable microcapsules in the form of Matsumoto Microspheres F-36 (Matsumoto Yushi-Seiyaku) based on the solid content of the aqueous acrylic resin was used for the synthetic resin, and after going through immersion, dehydration and drying steps, was impregnated so that the amount of resin after drying was 20 g/m$^2$ followed by further top-coating with Nipol LX430 (Zeon) having a glass transition temperature of 12°C on one side thereof so that the coated amount after drying was 5 g/m$^2$ to obtain a tape substrate sheet h.

(Coating of Adhesive and Release Agent)

Adhesive a was coated onto the untreated side of the aforementioned tape substrate sheet h so that the coated amount after drying was 50 g/m$^2$, while a release agent in the form of Peeloil 1010 (Ipposha Oil Industries) was coated onto the treated side so that the coated amount after drying was 0.2 g/m$^2$ to obtain the adhesive tape of the present invention.

The results of evaluating the resulting adhesive tape are shown in Table 4 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 $\mu$m and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 4.

[Example 12]

(Production of Tape Substrate Sheet)

A multilayer laminated web (SMMS), consisting of polypropylene fibers (S) having a fiber diameter of 18 $\mu$m and basis weight of 11 g/m$^2$ obtained by spunbonding, and microfibers (M) having a fiber diameter of 4 $\mu$m and a basis weight of 1.5 g/m$^2$ obtained by melt blowing, was thermocompression bonded to obtain a multilayer, laminated long fiber non-woven fabric having a partial thermocompression bonding ratio of 14%, a basis weight of 25 g/m$^2$ and a thickness of 240 $\mu$m, followed by embossing in the same manner as Example 11. Next, impregnation treatment was carried out in the same manner as Example 11 with the exception of changing the incorporated amount of microcapsules to 5% by weight and changing the amount of resin after drying to 15 g/m$^2$ followed by carrying out the same top coating as Example 11 to obtain tape substrate sheet i.

(Coating of Adhesive and Release Agent)

The same adhesive a as Example 1 was coated onto the untreated side of the aforementioned tape substrate sheet i at 50 g/m$^2$, while a release agent in the form of Peeloil 1010 (Ipposha Oil Industries) was coated onto the treated side at 0.2 g/m$^2$ to obtain the adhesive tape of the present invention.
The results of evaluating the resulting adhesive tape are shown in Table 4 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 $\mu$m and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 4.

[Example 13]

A long fiber web having a fiber diameter of 14 $\mu$m obtained by spunbonding using polyethylene terephthalate (PET, melting point: 265°C) was thermocompression bonded to obtain a polyester long fiber non-woven fabric having a partial thermocompression bonding ratio of 20%, basis weight of 20 g/m$^2$ and thickness of 120 $\mu$m. Next, embossing (width: 0.3 mm × embossing interval: 3 mm, ratio of embossed portion to non-embossed portion: 2:1) was carried out in the form of a broken line in the widthwise direction of the tape under conditions of a temperature of 160°C and linear pressure of 300 N/cm, followed by carrying out resin impregnation treatment. Furthermore, the angle of the broken line embossing was 1 degree with respect to the rotational axis of the rollers. Tape substrate sheet j was obtained by carrying out impregnation treatment in the same manner as Example 11 with the exception of using Nipol LX438C (Zeon) having a glass transition temperature of 1°C for the resin, changing the incorporated amount of microcapsules to 2% by weight, and impregnating the resin so that the amount of resin after drying was 15 g/m$^2$.

(Coating of Adhesive and Release Agent)

The same adhesive a as Example 1 was coated onto the untreated side of the aforementioned tape substrate sheet j at 50 g/m$^2$, while a release agent in the form of Peeloil 1010 (Ipposha Oil Industries) was coated onto the treated side at 0.1 g/m$^2$ to obtain the adhesive tape of the present invention.
The results of evaluating the resulting adhesive tape are shown in Table 4 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 $\mu$m and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 4.

[Example 14]

(Production of Tape Substrate Sheet)

Tape substrate sheet j was obtained in the same manner as Example 13.

(Coating of Adhesive and Release Agent)

The same adhesive a as Example 1 was coated onto the untreated side of the aforementioned tape substrate sheet e at 30 g/m$^2$, while a release agent in the form of Peeloil 1010 (Ipposha Oil Industries) was coated onto the treated side at 0.1 g/m$^2$ to obtain the adhesive tape of the present invention.
The results of evaluating the resulting adhesive tape are shown in Table 4 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 $\mu$m and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 4.

[Example 15]

(Production of Tape Substrate Sheet)

Tape substrate sheet k was obtained in the same manner as Example 11 with the exception of using an aqueous SBR resin in the form of Nipol LX110 (Zeon) having a glass transition temperature Tg of -47°C for the impregnated resin, and changing the incorporated amount of microcapsules to 8% by weight.

(Coating of Adhesive and Release Agent)

The same adhesive a as Example 1 was coated onto the untreated side of the aforementioned tape substrate sheet k at 50 g/m$^2$, while a release agent in the form of Peeloil 1010 (Ipposha Oil Industries) was coated onto the treated side at 0.3 g/m$^2$ to obtain the adhesive tape of the present invention.
The results of evaluating the resulting adhesive tape are shown in Table 4 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 $\mu$m and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 4.

[Example 16]

(Production of Tape Substrate Sheet)

Tape substrate sheet 1 was obtained in the same manner as Example 11 with the exception of changing the incorporated amount of microcapsules to 2% by weight and changing the amount of resin after drying to 30 g/m$^2$.

(Coating of Adhesive and Release Agent)

The same adhesive a as Example 1 was coated onto the untreated side of the aforementioned tape substrate sheet 1 at 25 g/m$^2$, while a release agent in the form of Peeloil 1010 (Ipposha Oil Industries) was coated onto the treated side at 0.2 g/m$^2$ to obtain the adhesive tape of the present invention.
The results of evaluating the resulting adhesive tape are shown in Table 4 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 $\mu$m and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 4.
[Table 4]

Table 4

| Example | | 11 | 12 | 13 | 14 | 15 | 16 |
|---|---|---|---|---|---|---|---|
| Fiber material | | PP | PP | PET | PET | PP | PP |
| Fiber diameter | μm | 18 | 4/18 | 14 | 14 | 18 | 18 |
| Basis weight | g/m$^2$ | 40 | 25 | 20 | 20 | 40 | 40 |
| Tg | °C | -17 | -17 | 1 | 1 | -47 | -17 |
| Amt. of impregnated resin | g/m$^2$ | 20 | 15 | 15 | 15 | 20 | 30 |
| Foaming temperature range (°C) | | 75/120 | 75/120 | 75/120 | 75/120 | 75/120 | 75/120 |
| Foaming agent ratio (%) | | 8 | 5 | 2 | 2 | 8 | 2 |
| Adhesive type | | Natural rubber | Natural rubber | Natural rubber | Natural rubber | Natural rubber | Natural rubber |
| Amt. of adhesive | g/m$^2$ | 50 | 50 | 50 | 30 | 50 | 25 |
| Amt. of release agent | g/m$^2$ | 0.2 | 0.2 | 0.1 | 0.1 | 0.3 | 0.2 |
| Top coat treatment | | Yes | Yes | Yes | Yes | Yes | Yes |
| Calendering | | No | No | No | No | No | No |
| Widthwise embossing | | Yes | Yes | Yes | Yes | Yes | Yes |
| Non-woven fabric thickness | mm | 0.33 | 0.24 | 0.17 | 0.18 | 0.34 | 0.37 |
| Tape thickness | mm | 0.37 | 0.28 | 0.21 | 0.20 | 0.37 | 0.39 |
| Elongation stress (5%) | N/10 mm | 9 | 5 | 12 | 12 | 8 | 10 |
| Tensile strength at break | N/10 mm | 23 | 13 | 25 | 26 | 23 | 25 |
| Elongation at break | % | 44 | 33 | 30 | 31 | 47 | 46 |
| Flexural rigidity (mNcm$^2$/cm) | Lengthwise | 4.5 | 2.8 | 2.4 | 2.3 | 4.0 | 4.7 |
| | Widthwise | 2.5 | 0.9 | 1.1 | 1.0 | 2.1 | 2.8 |
| SUS adhesive strength | N/10 mm | 1.9 | 2.0 | 2.5 | 2.1 | 2.3 | 2.2 |
| Rough surface followability (initial) | | A | B | B | B | A | A |
| Rough surface followability (over time) | | A | B | B | B | A | B |
| Widthwise embossing angle (degrees) | | 1 | 1 | 1 | 1 | 1 | 1 |
| Widthwise embossing impression depth ratio (%) | | 80 | 77 | 83 | 83 | 82 | 82 |
| Tear strength (initial) | N/25 mm | 8.7 | 7.1 | 5.8 | 5.5 | 8.5 | 8.1 |
| Tear strength (over time) | N/25 mm | 4.3 | 3.5 | 2.5 | 2.3 | 4.1 | 3.8 |
| Manual tearability | | B | B | B | B | B | B |
| Production processing suitability | | B | B | B | B | B | B |
| Masker processing suitability | | A | B | B | B | A | A |

[Example 17]

(Production of Tape Substrate Sheet)

Tape substrate sheet m was obtained in the same manner as Example 11 with the exception of changing the angle of solid line embossing to 0.5 degrees with respect to the rotational axis of the rollers.

(Preparation of Adhesive)

0.1 g of Tetrad C (Mitsubishi Gas Chemical) was added to 100 g of Polythick 430SA (Sanyo Chemical Industries) followed by stirring well to obtain a solvent-based acrylic adhesive b having a solid content of 50% and viscosity at 23°C of 25000 mPa·s.

(Coating of Adhesive and Release Agent)

Adhesive b was coated onto the untreated side of the aforementioned tape substrate sheet m at 50 g/m$^2$ while a release agent in the form of Peeloil 1010 (Ipposha Oil Industries) was coated onto the treated side at 0.3 g/m$^2$ to obtain the adhesive tape of the present invention.
The results of evaluating the resulting adhesive tape are shown in Table 5 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 μm and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 5.

[Example 18]

(Production of Tape Substrate Sheet)

Tape substrate sheet n was obtained in the same manner as Example 11 with the exception of changing the angle of the broken line embossing to 1.5 degrees with respect to the rotational axis of the rollers.

(Coating of Adhesive and Release Agent)

The same adhesive a as Example 1 was coated onto the untreated side of the aforementioned tape substrate sheet n at 70 g/m$^2$, while a release agent in the form of Peeloil 1010 (Ipposha Oil Industries) was coated onto the treated side at 2.0 g/m$^2$ to obtain the adhesive tape of the present invention.
The results of evaluating the resulting adhesive tape are shown in Table 5 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 μm and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 5.

[Example 19]

(Production of Tape Substrate Sheet)

Tape substrate sheet o was obtained in the same manner as Example 11 with the exception of changing the angle of the solid line embossing to 3.0 degrees with respect to the rotational axis of the rollers, changing the incorporated amount of microcapsules to 10% by weight, and not carrying out top coating.

(Coating of Adhesive and Release Agent)

The same adhesive a as Example 1 was coated onto one side of the aforementioned tape substrate sheet o at 40 g/m$^2$, while a release agent in the form of Peeloil HT (Ipposha Oil Industries) was coated onto the opposite side at 5.0 g/m$^2$ to obtain the adhesive tape of the present invention.
The results of evaluating the resulting adhesive tape are shown in Table 5 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 μm and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 5.

[Example 20]

(Production of Tape Substrate Sheet)

A four-layer laminated web (SMMS), consisting of a polypropylene fiber non-woven fabric (S) having a fiber diameter of 18 μm and basis weight of 11 g/m$^2$ obtained by spunbonding for the top and bottom layers, and a polypropylene microfiber non-woven fabric (M) having a fiber diameter of 4 μm and a basis weight of 1.5 g/m$^2$ obtained by melt blowing for the two intermediate layers, was thermocompression bonded to obtain a multilayer, laminated long fiber non-woven fabric having a partial thermocompression bonding ratio of 14%, a basis weight of 25 g/m$^2$ and a thickness of 240 μm. Next, after calendering under conditions of a temperature of 20°C and linear pressure of 300 N/cm to obtain a thickness of 80 μm, embossing in the form of a broken line was carried out in the same manner as Example 13 and impregnation treatment was carried out in the same manner as Example 1 to obtain tape substrate sheet p.

(Coating of Adhesive and Release Agent)

The same adhesive a as Example 1 was coated onto one side of the aforementioned tape substrate sheet p at 40 g/m$^2$, while a release agent in the form of Peeloil 1010 (Ipposha Oil Industries) was coated onto the opposite side at 0.3 g/m$^2$ to obtain the adhesive tape of the present invention.
The results of evaluating the resulting adhesive tape are shown in Table 5 along with the properties of the non-woven fabric, tape base fabric and tape substrate sheet.

[Comparative Example 7]

(Production of Tape Substrate Sheet)

A tape substrate sheet having a thickness of 370 μm was produced in the same manner as Comparative Example 1 with the exception of not carrying out calendering, using an aqueous acrylic resin in the form of Nikazol FX-670 (Nippon Carbide Industries) having a glass transition temperature of 33°C for the impregnated resin, incorporating 5% by weight of heat-expandable microcapsules in the form of Matsumoto Microspheres F-36 (Matsumoto Yushi-Seiyaku) based on the solid content of the impregnated resin, and changing the amount of impregnated resin after drying to 30 g/m$^2$.

(Coating of Adhesive and Release Agent)

Adhesive and release agent were coated onto the aforementioned tape substrate sheet in the same manner as Comparative Example 1 to obtain an adhesive tape. The results of evaluating the resulting adhesive tape are shown in Table 5 along with the properties of the non-woven fabric, tape base fabric and tape substrate sheet.

(Production of Masker)

Adhesive tape cut to a width of 18 mm was overlapped and folded with the side edge on one side of a polyethylene film having a thickness of 10 μm and width of 1000 mm over 3 mm of the side edge on one side in the lengthwise direction of the adhesive tape, followed by folding the film and winding onto a paper tube having an outer diameter of 24 mm at a length of 25 m to obtain a masker having a maximum of 20 folds and a finished product width of 95 mm. The results of evaluating the processing suitability of the masker are shown in Table 5.

[Table 5]

Table 5

| Example | | 17 | 18 | 19 | 20 | Comp.Ex.7 |
|---|---|---|---|---|---|---|
| Fiber material | | PP | PP | PP | PP | PP |
| Fiber diameter | μm | 18 | 18 | 18 | 4/18 | 20 |
| Basis weight | g/m² | 40 | 40 | 40 | 25 | 70 |
| Tg | °C | -17 | -17 | -17 | -17 | 33 |
| Amt. of impregnated resin | g/m² | 20 | 20 | 20 | 20 | 30 |
| Foaming temperature range (°C) | | 75/120 | 75/120 | 75/120 | - | 75/120 |
| Foaming agent ratio (%) | | 8 | 8 | 10 | - | 5 |
| Adhesive type | | Acrylic | Natural rubber | Natural rubber | Natural rubber | Natural rubber |
| Amt. of adhesive | g/m² | 50 | 70 | 40 | 40 | 40 |
| Amt. of release agent | g/m² | 0.3 | 2.0 | 5.0 | 0.3 | 0.3 |
| Top coat treatment | | Yes | Yes | No | No | No |
| Calendering | | No | No | No | Yes | No |
| Widthwise embossing | | Yes | Yes | Yes | Yes | Yes |
| Non-woven fabric thickness | mm | 0.35 | 0.35 | 0.37 | 0.08 | 0.37 |
| Tape thickness | mm | 0.39 | 0.40 | 0.40 | 0.11 | 0.40 |
| Elongation stress (5%) | N/10 mm | 9 | 9 | 9 | 5 | 28 |
| Tensile strength at break | N/10 mm | 24 | 23 | 23 | 13 | 47 |
| Elongation at break | % | 45 | 46 | 45 | 35 | 37 |
| Flexural rigidity (mNcm²/cm) | Lengthwise | 4.5 | 4.5 | 4.5 | 0.8 | 5.0 |
| | Widthwise | 2.5 | 2.5 | 2.5 | 0.2 | 2.8 |
| SUS adhesive strength | N/10 mm | 2.3 | 2.7 | 2.3 | 2.0 | 2.1 |
| Rough surface followability (initial) | | A | A | A | A | D |
| Rough surface followability (over time) | | A | A | A | A | D |
| Widthwise embossing angle (degrees) | | 0.5 | 1.5 | 3.0 | 1.0 | 0 |
| Widthwise embossing impression de pth ratio (%) | | 80 | 81 | 85 | 80 | 65 |
| Tear strength (initial) | N/25 mm | 8.5 | 8.2 | 8.0 | 6.3 | 15.5 |
| Tear strength (over time) | N/25 mm | 4.2 | 4.0 | 3.8 | 2.7 | 8.8 |
| Manual tearability | | B | B | B | A | D |
| Production processing suitability | | A | B | B | B | B |
| Masker processing suitability | | A | A | A | - | B |

The adhesive tapes of the present invention of Examples 1 to 20 demonstrated favorable followability of curved surfaces, rough surfaces and irregular surfaces as a result of low flexural rigidity and stress during 5% elongation and having softness, demonstrated high adhesive strength and tensile strength, exhibited little tearing of tape when peeled off after having been applied in actual settings in which the adhesive tape of the present invention was used, demonstrated favorable manual tearability during taping work, and had favorable workability in the field.

On the other hand, the adhesive tapes of Comparative Examples 1 to 7 demonstrated poor followability of curved surfaces, rough surfaces and irregular surfaces, and did not meet the objectives of the adhesive tape of the present invention.

In addition, maskers using the adhesive tape of the present invention demonstrated favorable masker processing suitability and were able to be attractively finished into the form of a roll by laminating with a film.

INDUSTRIAL APPLICABILITY

Since the adhesive tape of the present invention and masker using the same demonstrate favorable followability of curved surfaces, rough surfaces and irregular surfaces, exhibit little tearing when peeled off after having been applied, and have favorable manual tearability, not only do they demonstrate superior workability, but since they also do not damage the site where they are applied, have a high value of industrial utilization.

BRIEF DESCRIPTION OF THE REFERENCE SYMBOLS

1   Adhesive tape
2   Curing sheet
A   Thickness of non-embossed portion
B   Thickness at indentation of embossed portion

**Claims**

1.  An adhesive tape, comprising: coating an adhesive onto one side of a tape substrate sheet, obtained by impregnating a synthetic resin having a glass transition temperature of 20°C or lower into a tape base fabric composed of a spunbonded thermoplastic long fiber non-woven fabric having a basis weight of 15 g/m$^2$ to 60 g/m$^2$ embossed in the width direction of the tape, at 5% by weight to 150% by weight as the amount of synthetic resin after drying based on the basis weight of the non-woven fabric, and coating a release agent onto the opposite side.

2.  The adhesive tape according to claim 1, wherein the embossing is composed of a solid line or broken line.

3.  The adhesive tape according to claim 1 or 2, wherein the thickness of the long fiber non-woven fabric is 30 $\mu$m to 500 $\mu$m.

4.  The adhesive tape according to any one of claims 1 to 3, wherein the long fiber non-woven fabric is calendered, and the thickness thereof is 30 $\mu$m to 150 $\mu$m.

5.  The adhesive tape according to any one of claims 1 to 4, wherein the thermoplastic long fibers are one or more types selected from polyester-based fibers selected from polyethylene terephthalate, polybutylene terephthalate, polytrimethylene terephthalate and polyethylene isophthalate, polyolefin-based fibers selected from high-density polyethylene, low-density polyethylene, polypropylene and ethylene-propylene copolymer, and polyamide-based fibers selected from nylon 6, nylon 66, nylon 610 and nylon 612.

6.  The adhesive tape according to any one of claims 1 to 5, wherein the synthetic resin is one or more types selected from natural rubber, synthetic rubber, (meth)acrylic acid ester copolymer, ethylene-vinyl acetate copolymer, polyvinyl acetate, polyvinyl chloride and polyurethane.

7.  The adhesive tape according to any one of claims 1 to 6, wherein the synthetic resin is foamed.

8.  The adhesive tape according to any one of claims 1 to 7, wherein a top coat layer composed of a synthetic resin having a glass transition temperature of 0°C to 40°C is provided on one side or both sides of the tape substrate sheet over a range of 2 g/m$^2$ to 15 g/m$^2$ of the amount of synthetic resin after drying.

9. The adhesive tape according to any one of claims 1 to 8, wherein the adhesive is at least one type selected from a rubber-based adhesive, acrylic-based adhesive, silicone-based adhesive and polyurethane-based adhesive.

10. The adhesive tape according to any one of claims 1 to 9, wherein the impression depth ratio of embossed indentations is 65% to 90% of the thickness of non-embossed portions, and the interval between the indentations is 1 mm to 10 mm.

11. The adhesive tape according to any one of claims 1 to 10, wherein tensile strength in the lengthwise direction is 5 N/10 mm or more, and stress during elongation by 5% in the lengthwise direction is 30 N/10 mm or less.

12. The adhesive tape according to any one of claims 1 to 11, wherein flexural rigidity is 0.1 mN·cm$^2$/cm to 5.0 mN·cm$^2$/cm in terms of the average value of flexural rigidity when bending to the front and back sides in the lengthwise direction as measured with the Kawabata Evaluation System (KES), and 0.1 mN·cm$^2$/cm to 3.0 mN·cm$^2$/cm in terms of the average value of flexural rigidity when bending to the front and back sides in the widthwise direction.

13. The adhesive tape according to any one of claims 1 to 12, wherein initial tear strength according to the trapezoid method is 12 N/25 mm or less.

14. A masking tape, comprising: winding the adhesive tape according to any one of claims 1 to 13 having a thickness of 30 μm to 150 μm into the form of a roll.

15. A masker, comprising: adhering the side edge on one side in the lengthwise direction of the adhesive surface of the adhesive tape according to any one of claims 1 to 13 having a thickness of 100 μm to 500 μm along the side edge of a curing sheet material, and winding the entirety thereof into the form of a roll.

16. A method for producing an adhesive tape, comprising: thermocompression bonding a spunbonded thermoplastic long fiber non-woven fabric having a basis weight of 15 g/m$^2$ to 60 g/m$^2$ between a pair of rollers composed of a smoothing roller and an embossing roller having protrusions in the form of a solid line or broken line at an angle of 0.2 degrees or more with respect to the rotational axis of the rollers, followed by impregnating with a synthetic resin having a glass transition temperature of 20°C or lower so that the impregnated amount of synthetic resin after drying is within the range of 5% by weight to 150% by weight based on the basis weight of the non-woven fabric, thereby obtaining a tape substrate sheet, and then coating an adhesive onto one side of the tape substrate sheet obtained, and coating a release agent onto the opposite side.

# Fig.1

## (a)

## (b)

# Fig.2

# Fig.3

## INTERNATIONAL SEARCH REPORT

| | International application No. |
|---|---|
| | PCT/JP2012/079170 |

**A. CLASSIFICATION OF SUBJECT MATTER**
*C09J7/04*(2006.01)i, *C09J201/00*(2006.01)i

According to International Patent Classification (IPC) or to both national classification and IPC

**B. FIELDS SEARCHED**

Minimum documentation searched (classification system followed by classification symbols)
C09J7/04, C09J201/00

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2006-28726 A  (Kamoi Kakoshi Co., Ltd.),<br>02 February 2006 (02.02.2006),<br>claims; paragraphs [0012], [0018], [0022],<br>[0025]; examples 1 to 4<br>(Family: none) | 1-6,8-15<br>7,16 |
| Y<br>A | JP 3-287850 A  (Unitika Ltd.),<br>18 December 1991 (18.12.1991),<br>claims; page 2, upper left column, lines 11 to<br>13; page 3, upper left column, lines 7 to 13<br>(Family: none) | 1-6,8-15<br>7,16 |

| [X]  Further documents are listed in the continuation of Box C. | [ ]  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    05 February, 2013 (05.02.13) | Date of mailing of the international search report<br>    19 February, 2013 (19.02.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/079170 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | Microfilm of the specification and drawings annexed to the request of Japanese Utility Model Application No. 191576/1986(Laid-open No. 94931/1988)<br>(Kuraray Co., Ltd.),<br>18 June 1988 (18.06.1988),<br>claims; specification, page 3, lines 3 to 6; page 3, line 17 to page 4, line 3; page 5, lines 11 to 13<br>(Family: none) | 1-6,8-15<br>7,16 |
| A | JP 2007-330376 A  (Nitto Denko Corp.),<br>27 December 2007 (27.12.2007),<br>claims<br>& US 2007/0212520 A1    & EP 1832261 A2 | 1-16 |
| A | JP 2005-179420 A  (Yazaki Corp.),<br>07 July 2005 (07.07.2005),<br>claims<br>(Family: none) | 1-16 |

Form PCT/ISA/210 (continuation of second sheet) (July 2009)

**EP 2 778 205 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H10237395 B
- JP 2003193005 A
- JP 2007075502 A

### Non-patent literature cited in the description

- **SUEO KAWABATA.** *Journal of the Textile Machinery Society of Japan (Textile Engineering),* 1973, vol. 26 (10), 721-728
- This KES-FB2 Pure Bending Tester. Kato Tech Co., Ltd,